# EUROPEAN PATENT SPECIFICATION

(11) **EP 0 465 923 B1**
(45) Date of publication and mention of the grant of the patent: **15.01.1997**
(21) Application number: 91110500.5
(22) Date of filing: 25.06.1991
(51) Int. Cl.: C08L 67/00, C08G 63/64

(54) **Copolyestercarbonate composition**
Copolyestercarbonatharzzusammensetzung
Composition de carbonate de copolyester

(30) Priority: 10.07.1990 US 550766
(43) Date of publication of application: 15.01.1992
(73) Proprietor: GENERAL ELECTRIC COMPANY, Schenectady New York 12305 (US)
(72) Inventor: Boutni, Omar Mohamed, Mount Vernon, Indiana 47620 (US); Morioka,Masataka c/o, 2-2 Kinugaok,Moka-Shi,Tochigi-Ken 321-53 (JP); Fontana, Luca Pietro, Evansville, Indiana 47712 (US); Morgan, Sarah Elizabeth, NL-4611 MZ Bergen op Zoom (NL); Patterson, Dwight Juan, Evansville, Indiana 47712 (US); Savenije, Hermanus Bernardus, NL-4611 LW Bergen op Zoom (NL)
(74) Representative: Szary, Anne Catherine

(56) References cited:
- EP-A- 0 005 736
- US-A- 4 286 083
- US-A- 4 522 980
- US-A- 4 626 572

## Description

Polycarbonates are well known amorphous polymers known for their transparency, toughness, and impact resistance. However, like almost all amorphous polymers, polycarbonate has a critical thickness wherein above this thickness the molded polymers are brittle. For standard polycarbonates, the ordinary thick section test system, 1/4 inch (1 inch = 25,4 mm), provides low notch impact resistance and a brittle failure system. Impact modifying polymer systems added to polycarbonate substantially improve the 1/4 inch Notched Izod impact resistance while also providing a ductile failure system. Examples of such impact modifying polymers system include polyolefins, acrylates, diene rubbers, styrenes, ABS, MBS, polysiloxanes, ethylene propylene diene monomer (EPDM), and the like.

Copolyestercarbonates are also well known. These polymers having both ester and carbonate linkages have properties which are similar to polycarbonates. However positive impact modification of previously known copolyestercarbonates has been at best unpredictable and demonstrates that in 1/4 inch thick section, ductility and outstanding impact improvements are not obtained. For example in USP 4,522,980 (980) it is disclosed that aromatic copolyestercarbonates can be positively impact modified only if the aromatic ester unit is substantially isophthalate rather than terephthalate. When copolyestercarbonates having the latter ester units are admixed with standard agents known to positively impact modify polycarbonates little or no impact resistance improvement is observed and the break mechanism remains brittle, see Table I of 980. When isophthalate containing copolyestercarbonates are admixed with the same or similar known impact modifying agents, the brittle break mechanism in the 1/8 inch test sample is upgraded to ductile but the brittle break in the 1/4 inch test sample remains brittle or essentially brittle and the impact resistance has not been raised to significantly higher values.

A copolyestercarbonate is used. This material has aliphatic ester units as well as aromatic carbonate units. Although the 1/4 inch thick test samples have low impact resistance and a brittle break mechanism, it has been surprisingly discovered that standard impact modifying agents which positively impact modify polycarbonate will also positively impact modify this new copolyestercarbonate by substantially raising the notch 1/4 inch thick test sample to significantly higher values at room temperature conditions as well as provide a ductile break mechanism. Additionally, the 1/8 inch Notch test results of the impact modified copolyester carbonate demonstrates much less sensitivity to temperature than the copolyestercarbonate alone. Therefore, there is provided significant impact resistance and a ductile break at very low temperature compared to the copolyestercarbonate.

### SUMMARY OF INVENTION

In accordance with the invention, there is a composition comprising an admixture of
(a) a copolyestercarbonate comprising the repeating units of the structure 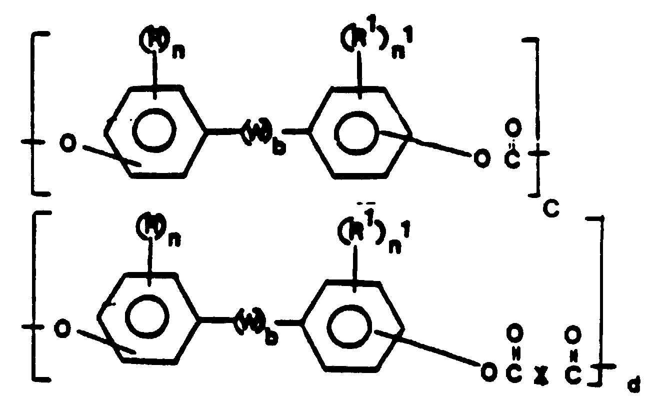 wherein:
   R is independently selected from halogen, monovalent hydrocarbon, and monovalent hydrocarbonoxy radicals;
   R¹ is independently selected from halogen, monovalent hydrocarbon, and monovalent hydrocarbonoxy radicals;
   W is selected from divalent hydrocarbon radicals, -S-, -S-S-, -O-, 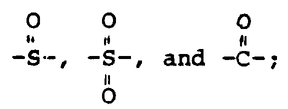
   n and n¹ are independently selected from integers having a value of from 0 to 4 inclusive;
   b is either zero or one;
   X is an aliphatic group of 6 to 18 carbon atoms, inclusive;
   d is from 2 to 30 mole percent of the total units c+d; and
(b) an impact modifier composition comprising an impact modifier which improves the impact properties of aromatic polycarbonate, said impact modifier composition being present in an amount of from 2 to 50 wt % based on the total amount of (a) + (b).

### DETAILED DESCRIPTION OF THE INVENTION

Dihydric phenols which are useful in preparing the copolyestercarbonate of the invention may be represented by the general formula 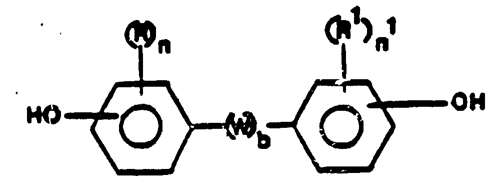 wherein:
R is independently selected from halogen, monovalent hydrocarbon, and monovalent hydrocarbonoxy radicals;
R¹ is independently selected from halogen, monovalent hydrocarbon, and monovalent hydrocarbonoxy radicals;
W is selected from divalent hydrocarbon radicals, -S-, -S-S-, -O-, 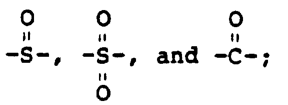
n and n¹ are independently selected from integers having a value of from 0 to 4 inclusive; and
b is either zero or one.

The monovalent hydrocarbon radicals represented by R and R¹ include the alkyl, cycloalkyl, aryl, aralkyl and alkaryl radicals. The preferred alkyl radicals are those containing from 1 to 12 carbon atoms. The preferred cycloalkyl radicals are those containing from 4 to 8 ring carbon atoms. The preferred aryl radicals are those containing from 6 to 12 ring carbon atoms, i.e., phenyl, naphthyl, and biphenyl. The preferred alkaryl and aralkyl radicals are those containing from 7 to 14 carbon atoms.

The preferred halogen radicals represented by R and R¹ are chlorine and bromine.

The divalent hydrocarbon radicals represented by W include the alkylene, alkylidene, cycloalkylene and cycloalkylidene radicals. The preferred alkylene radicals are those containing from 2 to 30 carbon atoms. The preferred alkylidene radicals are those containing from 1 to 30 carbon atoms. The preferred cycloalkylene and cycloalkylidene radicals are those containing from 6 to 16 ring carbon atoms.

The monovalent hydrocarbonoxy radicals represented by R and R¹ may be represented by the formula - OR² wherein R² is a monovalent hydrocarbon radical of the type described hereinafore. Preferred monovalent hydrocarbonoxy radicals are the alkoxy and aryloxy radicals.

Some illustrative non-limiting examples of the dihydric phenols falling within the scope of Formula II include:
2,2-bis(4-hydroxyphenyl)propane (bisphenol-A);
2,2-bis(3,5-dibromo-4-hydroxyphenyl)propane;
2,2-bis(3,5-dimethyl-4-hydroxyphenyl)propane;
1,1-bis(4-hydroxyphenyl)cyclohexane;
1,1-bis(3,5-dimethyl-4-hydroxyphenyl)cyclohexane;
1,1-bis(4-hydroxyphenyl)decane;
1,4-bis(4-hydroxyphenyl)propane;
1,1-bis(4-hydroxyphenyl)cyclododecane;
1,1-bis(3,5-dimethyl-4-hydroxyphenyl)cyclododecane;
4,4 -dihydroxydiphenyl ether;
4,4 -thiodiphenol;
4,4 -dihydroxy-3,3 -dichlorodiphenyl ether; and
4,4 -dihydroxy-2,5-dihydroxydiphenyl ether.

Other useful dihydric phenols which are also suitable for use in the preparation of the above polycarbonates are disclosed in U.S. Patent Nos. 2,999,835; 3,028,365; 3,334,154; and 4,131,575.

The carbonate precursor utilized in the invention can be any of the standard carbonate precursors such as phosgene, diphenyl carbonate and the like. When using an interfacial process or a bischloroformate process it is also preferred to use a standard catalyst system well known in the synthesis of polycarbonates and copolyestercarbonates. A typical catalyst system is that of an amine system such as tertiaryamine, amidine or guanidine. Tertiary amines are generally employed in such reactions. Trialkyamines such as triethylamine are generally preferred.

The monomer which supplies the ester units in the copolyestercarbonate is an aliphatic alpha omega dicarboxylic acid or ester precursor from 8 to 20 carbon atoms preferably 10 to 12 carbon atoms. The aliphatic system is normal, branched or cyclic. Examples of the system include sebacic acid, azelaic acid, dodecanedioic acid, C14, C18 and C20 diacids. The normal saturated aliphatic alpha omega dicarboxylic acids are preferred. Sebacic and dodecanedioic acid are most preferred. Mixtures of the diacids can also be employed. It should be noted that although referred to as diacids, any ester precursor can be employed such as acid halides, preferably acid chloride, diaromatic ester of the diacid such as diphenyl, for example the diphenylester of sebacic acid. With reference to the carbon atom number earlier mentioned, this does not include any carbon atoms which may be included in the ester precursor portion, for example diphenyl.

The copolyestercarbonates used in the invention can be prepared by the known methods, for example those appearing in Quinn US-A-4,238,596 and Quinn and Markezich US-A-4,238,597. Examples of such processes include the formation of acid halides prior to the reaction of the ester forming group with the dihydric phenol and then followed by phosgenation. Still further, the basic solution process of Goldberg in the US-A-3,169,121 reference utilizing a pyridine solvent can also be employed while also using the dicarboxylic acid per se. A melt process utilizing the diesters of the alpha omega dicarboxylic acids can also be employed. An example of such a compound is the diphenylester of sebacic acid.

After substantial experimentation, it has been found that a preferred process for making the copolyestercarbonates used in this invention exists. The process of Kochanowski, USP 4,286,083 (083) was initially utilizied and then improved upon. It was found that lower diacids such as adipic acid were not incorporated into the polymer backbone to any great extent. Rather, one had to go up to higher carbon atom dicarboxylic acids before any significant incorporation of diacid into the backbone was observed. We have found that the diacid is preferentially introduced as the preformed salt, preferably an alkali metal such as sodium into the interfacial reaction reactor. The water phase is maintained at an alkaline pH preferably from about 8 to 9 for most of the phosgenation period and then raising the pH to a level of about 10 to 11 for the remainder of the phosgenation time period which is generally a minimum of 5%.

In order to control molecular weight, it is standard practice to utilize a chain stopping agent which is a monofunctional compound. This compound when reacting with the appropriate monomer provides a nonreactive end. Therefore the quantity of chain stopping compound controls the molecular weight of the polymer. Bulkier chain terminators than phenol should provide substantially better retention of physical properties such as impact. Examples of these bulkier substituents include paratertiarybutylphenol, isononyl phenol, isooctyl phenol, cumyl phenols such as meta and paracumyl phenol, preferably paracumyl phenol, as well as chromanyl compounds such as Chroman I.

The copolyestercarbonate used in this invention with the standard endcapping reagent possesses a substantially lowered glass transition temperature, Tg, therefore providing processability at a lower temperature. Surprisingly accompanying this low temperature processability are substantially equivalent physical properties as a standard polycarbonate of the same intrinsic viscosity as the inventive composition and very high flow rates.

The aliphatic alpha omega dicarboxylic acid ester is present in the copolyestercarbonate in quantities from 2 to 30 mole percent, based on the dihydric phenol. Generally with quantities below 2 mole percent the Tg is insufficiently lowered and significantly altered flow rate is not observed. Above 30 mole percent, the physical properties of the copolyestercarbonate are significantly hindered in comparison to the polycarbonate without the aliphatic ester linkages. Preferred mole percents of aliphatic alpha omega dicarboxylic acid ester are from 5 to 25 and more preferably 7 to 20 mole percent of the dihydric phenol.

The weight average molecular weight of the copolyestercarbonate can generally vary from 10,000 to 100,000 as measured by GPC, using a polystyrene standard corrected for polycarbonate. A preferred weight average molecular weight is from 16,000 to 40,000.

The copolyestercarbonate has the following structural units 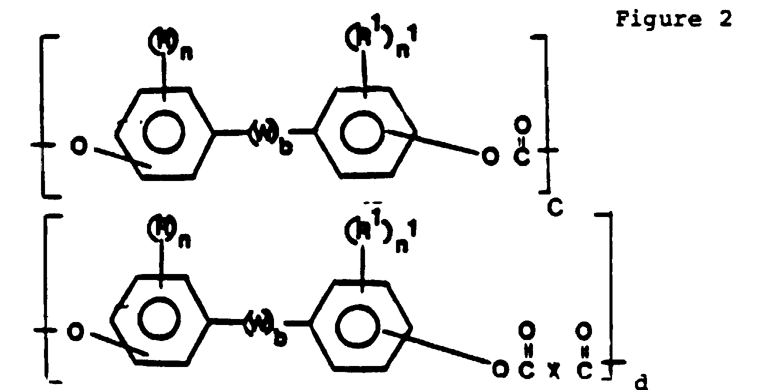 where R, R¹, n, n¹, W and b have been previously described and X is an aliphatic grouping of 6 to about 18 carbon atoms, inclusive. The d repeating unit is present in the copolyestercarbonate in from 2 to 30 mole percent of the total of the repeating units c+d, X is preferably 8 to 16 carbon atoms, inclusive. The aliphatic system is preferably saturated and is normal, branched, cyclic or alkylene substituted cyclic. The mole percent of d is preferably 5 to 25 and more preferably 7 to 20 mole percent. For example, when 5 moles of bisphenol-A reacts completely with 4 moles of phosgene and 1 mole of dodecanedioic acid, the resulting copolyestercarbonate is said to have 20 mole percent ester content. That is, the d unit is 20 mole percent of the c + d units.

Any material known to impact modify aromatic polycarbonate, particularly polycarbonate derived from bisphenol A, should be useful in upgrading the impact properties of the aromatic copolyester carbonate used in this invention. Examples of these impact modifiers include but are not limited to the following general categories:
polyacrylates
polyolefins
rubbery dienic polymers
styrenic polymers

The polyacrylates which can be employed as impact modifiers are rubbery homopolymers or copolymers. In general the polyalkyl acrylates described in Brinkmann et al., U.S. Pat. No. 3,591,659 can be used, especially those containing units derived from alkyl acrylates, particularly n-butyl acrylate. Acrylate containing copolymers wherein the other monomer is, for example, derived from a methacrylate are also readily employable, see for example Japanese Patent Application Announcement 1968-18611. Preferably the acrylate resin will be in the form of a rubber-elastic graft copolymer having a glass transition temperature below about -10°C., preferably below about -20°C. Schlichting, U.S.P. 4,022,748. More preferably, the acrylate resin will comprise a multiple stage polymer having a rubbery first stage (core) and a thermoplastic hard final stage (shell), see Farnham U.S.P. 4,096,202, incorporated by reference.

The most preferred acrylate resin is a multiphase composite interpolymer comprised of a C₁₋₅ acrylate and a C₁₋₅ methacrylate. These interpolymers consist of about 25 to 95 weight percent of a first elastomeric phase polymerized from a monomer system comprising about 75 to 99.8 weight percent of a C₁₋₅ alkyl acrylate, 0.1 to 5 percent by weight cross linking monomer, 0.1 to 5 percent by weight of graftlinking monomer, and about 75 to 5 weight percent of a final rigid thermoplastic phase polymerized in the presence of said elastomeric phase.

The crosslinking monomer is a polyethylenically unsaturated monomer having a plurality of addition polymerizable reactive groups all of which polymerize at substantially the same rate of reaction. Suitable crosslinking monomers include polyacrylic and polymethacrylic esters of polyols such as butylene diacrylate and dimethacrylate, trimethylol propane trimethacrylate and methacrylate, and the like. The preferred crosslinking monomer is butylene diacrylate.

The graftlinking monomer is a polyethylenically unsaturated monomer having a plurality of addition polymerizable reactive groups, at least one of which polymerizing at substantially different rates of polymerization from at least one other of said reactive groups. The function of the graftlinking monomer is to provide a residual level of unsaturation in the elastomeric phase, particularly in the latter stages of polymerization and, consequently, at or near the surface of the elastomer particles.

When the rigid thermoplastic phase is subsequently polymerized at the surface of the elastomer, the residual unsaturated addition polymerizable reactive group contributed by the graftlinking monomer participates in the subsequent reaction so that at least a portion of the rigid phase is chemically attached to surface of the elastomer. Among the effective graftlinking monomers are alkyl group-containing monomers of alkyl esters of ethylenically unsaturated acids such as allyl acrylate, allyl methacrylate, diallyl maleate, diallyl fumarate, and allyl acid itaconate. Somewhat less preferred are the diallyl esters of polycarboxylic acids which do not contain polymerizable unsaturation. The preferred graftlinking monomers are allyl methacrylate and diallyl maleate.

A most preferred interpolymer has only two stages, the first stage comprising about 60 to 95 percent by weight of the interpolymer and being polymerized from a monomer system comprising 95 to 99.8 percent by weight butyl acrylate, 0.1 to 2.5 percent by weight butylene diacrylate as crosslinking agent, 0.1 to 2.5 percent by weight allyl methacrylate or diallyl maleate as a graftlinking agent, with a final stage polymerized from about 60 to 100 percent by weight methyl methacrylate. The multiphase composite interpolymer Acryloid KM-330 (EXL 2330) available from Rohm and Haas is preferred. This interpolymer is comprised of small quantities of cross linking and graft linking monomers, about 80 weight percent n-butyl acrylate and about 20 weight percent methyl methacrylate.

Also available for use in the inventions are an ABS or ABS type compositions. Useful compositions comprise graft polymers obtained by grafting 5 to 90 parts by weight of a mixture of
a. 50-95 parts by weight styrene, α-methylstyrene, methyl nuclear substituted styrene (particularly para substituted) methylmethacrylate or mixtures thereof and
b. 50 to 5 parts by weight acrylonitrile, methacrylonitrile, methylmethacrylate, maleic anhydride, N-substituted maleic imide or mixtures thereof, unto
c. 95 to 10 parts by weight of a rubber having a glass temperature, Tg, of <10°C. The rubber may be replaced with up to about 50 wt.% of the styrenic listed in (a) above. Preferably the graft polymers contains at least 30 wt.%, more preferably at least 50 wt.% of the rubber. Generally, the rubber is polymerized butadiene or isoprene, preferably butadiene. Of course, some free copolymers of (a) and (b) above are present in the graft polymer. The preferred resins are graft copolymers of acrylonitrile butadiene styrene (ABS) or methylmethacrylate butadiene styrene (MBS). With respect to MBS a preferred configuration is coreshell. These resins may be made by any of the well known methods including emulsion polymerization, suspension polymerization, bulk polymerization, or bulk suspension polymerization as well as typically well known methods directed to the core shell preparations. Although styrenic moieties are usually employed they can be omitted. For example a rubbery copolymer such as methylmethacrylate butadiene and the like can also be effectively employed. Still further rubbery polymers are methylmethacrylate butadiene acrylonitrile or methylmethacrylate butadiene alkylacrylate wherein alkyl is ethyl, butyl and the like.

The polyolefins which can be employed as impact modifiers are homopolymers or copolymers. Examples of the homopolymers include polyethylene, polypropylene, polybutene-1, polyhexene and the like. The polymers include the standard high density polymers, low density polymers as well as the newer linear low density polyolefins such as the linear low density polyethylene made with butene-1 or octene-1. Other examples of copolymers containing at least one olefin monomer can be employed. For example copolymers of ethylene and propylene can be employed as the impact modifier as well as a copolymer of an olefin and an acrylate such as ethylene ethyl acrylate, a copolymer available from Union Carbide as DPD-6169. Other higher olefin monomers can be employed as copolymers with alkyl acrylates, for example propylene and n-butyl acrylate and the like. These polyolefins polymers can also be reacted with rubbery dienes so as to form terpolymers of the EPDM family such as ethylene propylene diene terpolymers, for example Epsyn 704 available from Copolymer Rubber.

The EPDM copolymers may be readily prepared by known methods. They may be prepared by the reaction of an olefin with a rubbery diene. The olefins which may be reacted with the dienes are the known olefins as described hereinafore, preferably the lower olefins such as ethylene, propylene, butylene, and the like. The dienes include the known dienes such as the norbornenes such as ethylidene norbornene, butadiene, pentadiene, isoprene, cyclopentadiene, cyclohexadiene, and the like. Preferred olefin-diene polymers are the terpolymers formed by the reaction of two olefins with a diene. Particularly useful terpolymers are those of the EPDM family such as ethylene propylene diene terpolymers. Some illustrative non-limiting examples of the EPDM type terpolymers include ethylene propylene norbornene, ethylene propylene ethylidene norbornene, ethylene propylene pentadiene, ethylene propylene cyclo-pentadiene, and the like. These EPDM type terpolymers are well known in the art and are generally commercially available from several sources such as, the aforementioned Epsyn 704 from Copolymer Rubber, and the Vistalon Series from Exxon Chemicals such as Vistalon 3708, Vistalon 2504, and the like. Additionally modified EPDM polymers such as EPDM grafted styrene acrylonitrile (Royaltuf 372-P) available from Uniroyal can also be employed.

Also available as impact modifiers are various styrenic polymers. Examples of these polymers include non hydrogenated or selectively hydrogenated linear, sequential or radical teleblock copolymers. These materials are well known in the art, generally commercially available or may readily be prepared by known methods.

Prior to hydrogenation the end blocks of these polymers comprise homopolymers or copolymers preferably prepared from alkenyl aromatic hydrocarbons and particularly vinyl aromatic hydrocarbons wherein the aromatic moiety may be either monocyclic or polycyclic. Typical monomers include styrene, alpha-methyl styrene, p-methyl styrene, vinyl xylene, ethyl vinyl xylene, vinyl naphthylene, and the like, or mixtures thereof. The end blocks (A) and (A') may be the same or different. They are preferably selected from styrene, alpha-methyl styrene, vinyl toluene, vinyl xylene, vinyl naphthylene, and especially styrene. The center block (B) may be derived from, for example, butadiene, isoprene, 1,3-pentadiene, 2,3-dimethylbutadiene, and the like, and it may have a linear, sequential or teleradial structure.

The selectively hydrogenated linear block copolymers are described in Haefel et al., U.S. Pat. No. 3,333,024, which is incorporated herein by reference.

The ratio of the copolymers and the average molecular weights can vary broadly, although the molecular weight of the center block should be greater than that of the combined terminal blocks. It is preferred to form terminal block A each having a weight average molecular weight of about 2,000 to about 60,000 and center block B, e.g., a hydrogenated polybutadiene block, with a weight average molecular weight of about 20,000 to 450,000. Still more preferably, the terminal blocks each have a weight average molecular weight of about 7,000 to about 35,000 while the hydrogenated polybutadiene polymer blocks have a weight average molecular weight between about 30,000 and 150,000. The terminal blocks will preferably comprise from about 20 to about 45% by weight, more preferably from about 25 to about 40% by weight of the total block polymer. The preferred copolymers will be those having a polybutadiene center block wherein from about 35 to about 55% of the butadiene block segment is the structure resulting from 1,2 addition.

The hydrogenated copolymer will have the average unsaturation reduced to less than 20% of the original value. It is preferred to have the unsaturation of the center block B reduced to 10%, or less, preferably 5%, or less, of its original value. After hydrogenation center blocks B derived from isoprene will have the ethylene butylene structure.

The block copolymers are formed by techniques well known to those skilled in the art. Hydrogenation may be conducted utilizing a variety of hydrogenation catalysts such as nickel on kieselguhr, Raney nickel, copper chromate, molybdenum sulfide and finely divided platinum or other noble metals on a carrier.

Hydrogenation may be conducted at any desired temperature or pressure, e.g., from atmospheric to about 3000 psig. The usual range being between 100 and 1,000 psig at temperatures from 75^{o}C to 315^{o}C for times between 0.1 and 24 hours, preferably from 0.2 to 8 hours.

Hydrogenated block copolymers such as Kraton G-1650 and Kraton G-1651 from Shell Chemical Company, Polymers Division, have been found useful in the present invention. Also useful are the Solprenes from Phillips.

The radial teleblock copolymers of which the Solprenes are typical examples can be characterized as having at least three polymer branches with each branch of the radical block copolymer comprising terminal non-elastomeric segments, e.g. (A) and (A'), as defined hereinafore. The branches of the radial block polymer contain a terminal non-elastomeric segment attached to an elastomeric polymer segment, e.g.(B) as defined hereinafore. These are described in Marrs, U.S. Pat. No. 3,753,936 and in Zelinski, U.S. Pat. No. 3,281,383 and they are selectively hydrogenated by well known procedures. In any event, the term "selective hydrogenation" is used herein to contemplate polymers in which the non-elastomeric blocks (A) and (A') have been left unhydrogenated, i.e., aromatic.

Further examples of impact modifiers which can be employed include the polycarbonate polysiloxane random copolymers. Examples of such polymers include those in disclosures of USP 3,189,662 issued to Vaughn and assigned to GE as well as USP 4,027,072, USP 4,123,588 issued to Molari and assigned to GE and USP 4,735,999 issued to Patterson and assigned to GE.

Other known impact modifiers include various elastomeric materials such as, organic silicone polymers, organic silicone polysiloxane polymers, elastomeric fluorohydrocarbons, elastomeric polyesters and the like.

Any minimum quantity of impact modifier which positively upgrades the impact strength of the aromatic copolyester carbonate can be employed. Greater than this minimum quantity can be employed as long as the properties desired for a particular application of the aromatic copolyester carbonate are substantially maintained. Generally, a minimum of about two weight percent is sufficient to observe an increase. Three percent can also be employed as well. A minimum of about four weight percent is preferred. For most of the impact modifiers, a level of about twenty wt. percent, generally fifteen percent should not be exceeded, however for certain of the modifiers such as ABS and ASS type resins (rubbery) quantitites up to about 40 weight percent. Weight percent is measured as the amount of impact modifier in the total of impact modifier plus copolyester carbonate. Combinations of impact modifiers can be employed.

When these impact modifiers are used, other effects beyond impact modification can be observed. For example when an ABS is used, lower processing temperatures, shear thinning rheology and reduction in 60^{o} gloss can also be observed.

Other polymers can also be present in the admixture. Of interest particularly wherein a rubbery polymer is employed as an impact modifier for example ABS or MBS, is the copolymer comprised of the monomers grafted onto the rubber. For example copolymers prepared from the polymerization of (a) 50 to 95 parts by weight styrene,-methylstyrene, methyl nuclear substituted styrene (particularly para substituted), methylmethacrylate or mixtures thereof and (b) 50 to 5 parts by weight acrylonitrile, methacrylonitrile, methylmethacrylate, maleic anhydride, N substituted maleic imide or mixtures thereof are particularly useful. Particularly preferred are styrene acrylonitrile copolymers. Quantities can vary from about 1 to 30 wt.% calculated on the basis of copolyestercarbonate, impact modifier and additional polymer.

Further polymers may also be present in the composition. Of importance as an additional polymer is the presence of aromatic polycarbonate i.e. bisphenol-A polycarbonate. As is observed from the data the copolyestercarbonate of this application has the advantage of better flow and processability at a lower temperature than ordinary aromatic polycarbonate because of a lower Tg. However various heat related properties of the copolyestercarbonate, such as DTUL, are lowered. By adding standard aromatic polycarbonates, that is, without an aliphatic diester portion, a balance of values among heat properties, melt flow and Tg can be obtained.

The aromatic polycarbonate can vary from about 5-95 weight percent of the total aromatic polycarbonate and copolyestercarbonates. It is preferred to use less than 50 weight percent aromatic polycarbonate. It should be noted that when aromatic polycarbonate is also present, the weight percent of impact modifier is calculated as impact modifier divided by impact modifier plus copolyestercarbonate plus aromatic polycarbonate.

The composition of the invention may be compounded in the usual manner, for example blending the copolyester carbonate with the impact modifier in dry from, for example powder or granules and the like and then extruding the composition.

### PREPARATION

### Preparation of Copolyestercarbonate with Dodecanedioc Acid

The disodium salt of dodecanedioic acid (DDDA) was generated by dissolving the free acid (7.2 g, 31 mmol) and NaOH pellets (2.7 g, 68 mmol) in water (180 mL).

A 2000 mL five neck Morton flask equipped with a bottom outlet was fitted with a mechanical stirrer, a pH probe, an aqueous sodium hydroxide (50%) inlet tube, a Claisen adapter to which a dry ice condenser was attached, and a gas inlet tube. The flask was charged with bisphenol A (71 g, 311 mmol), triethylamine (0.9 mL), p-cumylphenol (2.0 g, 9 mmol), methylene chloride (220 mL), and the disodium salt solution of DDDA described above. Then phosgene was introduced at a rate of 2 g/min while the pH was maintained at 8 by addition of caustic for 10 minutes. The pH was then raised and maintained at around 10.5 while phosgene addition continued for 10 additional minutes. The total amount of phosgene added was 40 g (400 mmol). The pH was adjusted to 11-11.5 and the organic phase was separated from the brine layer, washed with 2% hydrochloric acid, (3 x 300 mL), and with deionized water (5 x 300 mL).

The methylene chloride solution was dried (MgSO₄), filtered, and then precipitated into methanol (1500 mL). The resin was washed with methanol (1 x 500 mL) and deionized water (4 x 500 mL), and dried at 110^{o}C for 15 hours.

In the examples below a 10 mole percent dodecanedioate containing copolyestercarbonate was used wherein the dihydric phenol is bisphenol-A and is identified as PEC.

B-56 is a methylmethacrylate/butadiene/styrene elastomer obtained from Kanegafuchi Chemical, Industry Co., LTD.

Kraton G1651 is a selectively hydrogenated block styrene butadiene styrene copolymer from Shell.

KM330 is a core shell n-butylacrylate core (80 wt.%) methylmethacrylate shell (20 wt.%) with small quantities of graft and cross linking monomers available from Rohm and Haas.

EEA is an ethylene ethylacrylate copolymers with 82 wt.% ethylene and 18 wt.% ethylacrylate available from Union Carbide.

LR3320 is a polysiloxane polycarbonate copolymer having 43 wt.% dimethysiloxane and available from GE Plastics.

Blendex 338 is an ABS with 7.5 wt.% acrylonitrile, 70 wt.% butadiene and 22.5 wt.% styrene available from GE Plastics.

ABS 333 is an ABS with 50% butadiene, 35% styrene and 15% acrylonitrile.

EPDM is an ethylene propylene terpolymer (Vistalon 3708) available from Exxon Chemical.

In examples 1-6, 0.1 wt.% of a phosphite and 0.2 wt.% of a hindered phenol are present as well. In examples 7 to 18, 0.1 wt.% of a phosphite, 0.2 wt.% of a thioester and 0.3 wt.% of a hindered phenol are present.

The examples were extruded at 230-250^{o}C and molded at 260-300^{o}C.

The control is bisphenol A copolyestercarbonate with 10 mole percent dodecanedioate ester content. All the examples, 1-23 use this same copolyestercarbonate as well.

The 1/8 inch and 1/4 inch Notched Izod is measured according to ASTMD256 and reported in kg-cm/cm. The double gate Izod, a measurement of compatibility of the blend, is measured according to ASTMD256 and is reported kg-cm/cm.

The quantities of copolyestercarbonate and impact modifier are reported as wt.%. Where there is no superscript the mechanism at break is completely ductile, otherwise the numbers represent the percent ductile at break. Below are the results:

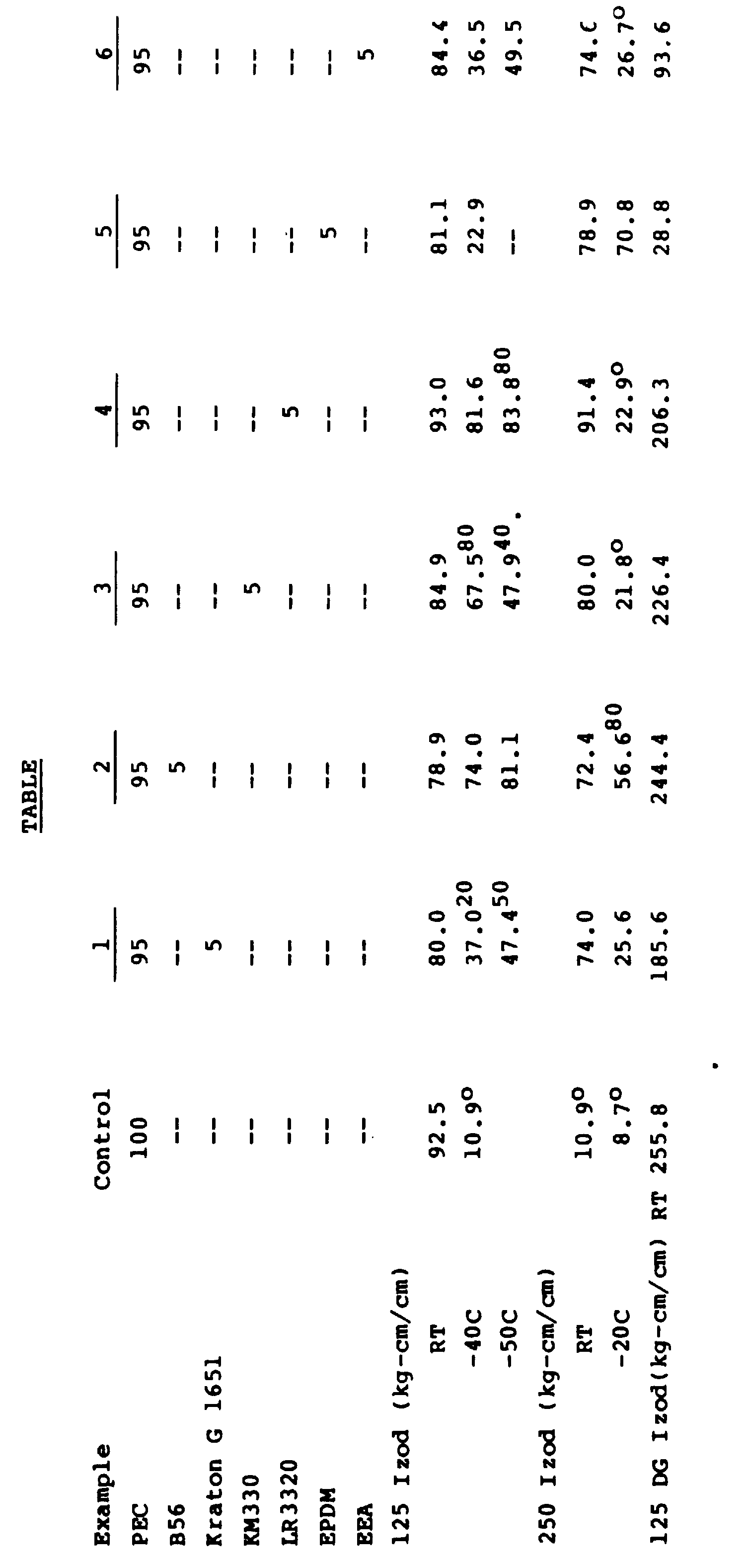

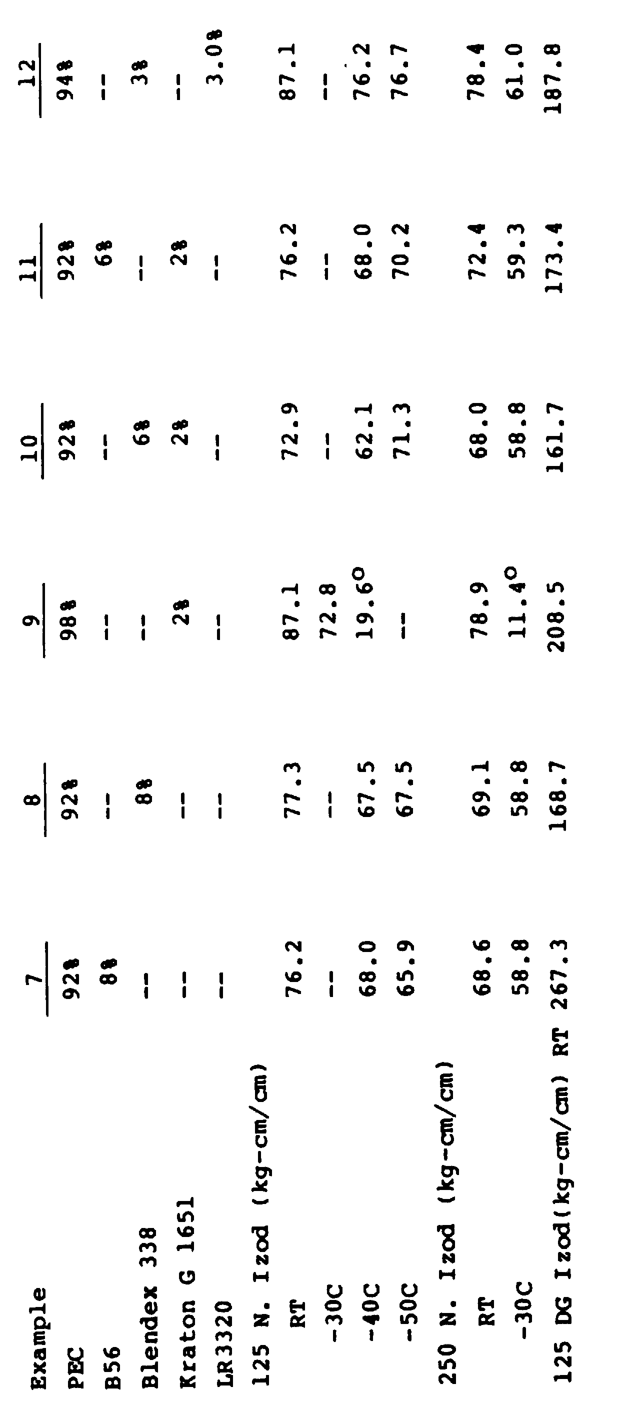

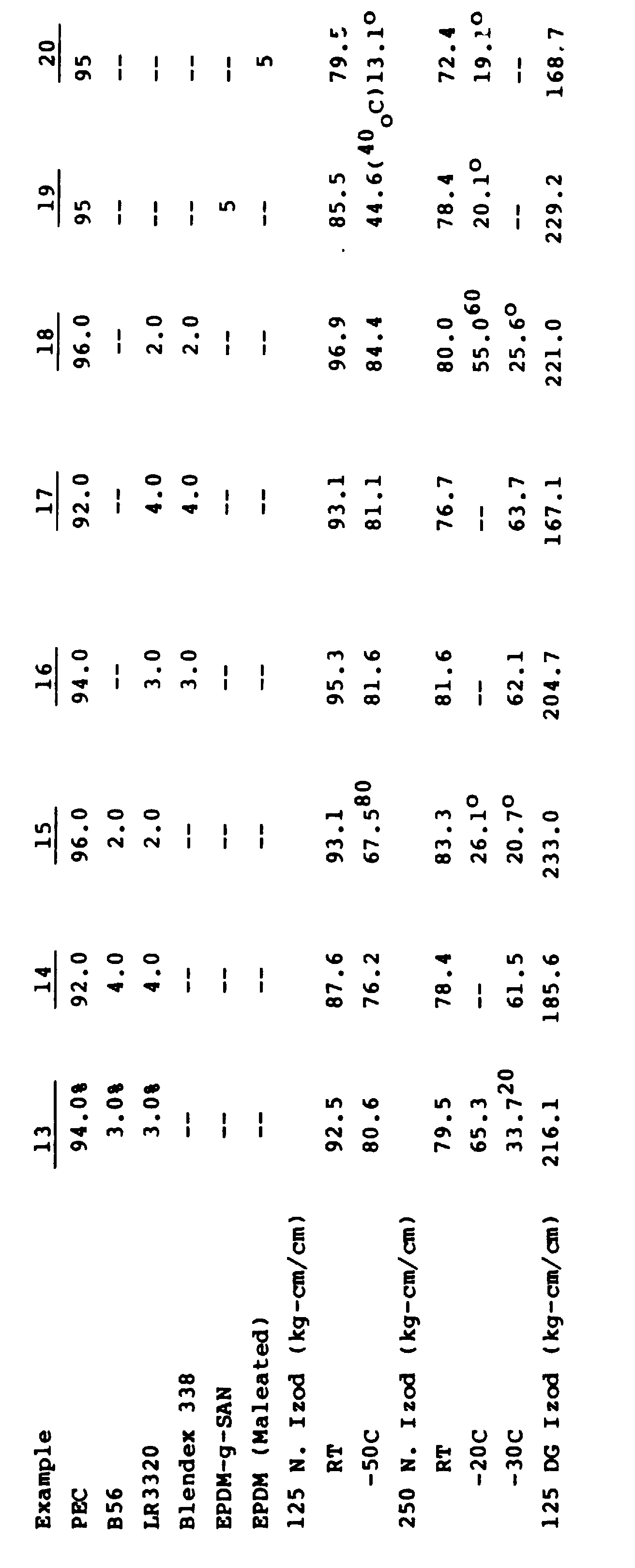

These data demonstrate that a broad variety of impact modifiers effectively impact the copolyestercarbonate in both the 1/8 and 1/4 inch thickness test samples with respect to the actual impact resistance and the failure mechanism at break. The 1/8 inch Notched Izod data demonstrate that high impact resistance is maintained at extremely low temperatures and is usually accompanied by complete ductility at break. Note the control copolyestercarbonate alone at -40^{o}C has very low impact resistance and is completely brittle at break. With respect to the 1/4 inch thickness test sample, at room temperature the control, alone, already has very low impact resistance and is completely brittle at break. However the impact modified compositions all show very high impact resistance and completely ductile break at room temperature. These values are significantly maintained even at substantially reduced temperatures. The double gate values show excellent compatibility of all the blends.

### EXAMPLES 21 AND 22

Compositions having an additional polymer were prepared. Using the same copolyestercarbonate as used in the previous examples, compositions with 6 wt.% ABS, 14 wt.% styrene acrylonitrile (SAN) and 80 wt.% PEC, Example 21, and 12 wt.% ABS, 28 wt.% SAN and 60 wt.% PEC, Example 22, were prepared, (ABS is Blendex 333 with acrylonitrile 15.5 wt.%, butadiene 50 wt.% and styrene 35 wt.%). Styrene acrylonitrile is SAN 2866 which is 72 wt.% styrene and 28 wt,% acrylonitrile. As a control the same blend weight percents were prepared but using a bisphenol-A polycarbonate of an intrinsic viscosity of about 0.50-0.52 dl/g as measured in methylene chloride at 25^{o}C. This intrinsic viscosity approximates the intrinsic viscosity of the PEC.

The following properties were measured:
Melt viscosity index (MVI) in cc/min at 260°C and 50N
Vicat B at 1211°C
HDT at 120°C
Melt viscosity (Pas) at 280°C/5 min
1/8 inch Notched Izod impact ASTMD256 reported as kg-cm/cm (% ductile)
Doublegate ASTMD256 reported as kg-cm/cm (% ductile)

**TABLE 2**

| | Control | Example 21 |
|---|---|---|
| | 80 PC | 80 PEC |
| | 14 SAN | 14 SAN |
| | 6 ABS | 6 ABS |
| MVI (cc/10 min) | 16.7 | 23.1 |
| 260 C/50N | | |
| Vicat B/120 (°C) | 140 | 124 |
| HDT/120 (°C) | 131 | 111 |
| MV (Pa.s) 280C/5 min Shear Rate (sec⁻¹) | | |
| 114.8 | 595 | 312 |
| 229.6 | 530 | 294 |
| 574.0 | 375 | 245 |
| 1148.3 | 263 | 185 |
| 1500.0 | 225 | 164 |
| 2296.5 | 170 | 134 |
| 125 Notched Izod Impact Room Temp. 0°C | 69.3(100) | 75.4(100) |
| -10°C | 42.8(60) | |
| -20°C | 25.5(0) | 59.1(100) |
| -30°C | | 45.9(80) |
| -40°C | | 17.3(0) |
| Double gate Room Temp. | 15.3(0) | 13.3(0) |

**TABLE 3**

| Formulation # | Control | Example 22 |
|---|---|---|
| | 60 PC | 60 PEC |
| | 28 SAN | 28 SAN |
| | 12 ABS | 12 ABS |
| MVI (cc/10 min) | 16.6 | 22.6 |
| 260 C/50N | | |
| Vicat B/120 (°C) | 128 | 117 |
| HDT/120 (°C) | 123 | 107 |
| MV (Pa.s) 280C/5 min Shear Rate (sec⁻¹) | | |
| 114.8 | 581 | 326 |
| 229.6 | 472 | 279 |
| 574.0 | 308 | 212 |
| 1148.3 | 210 | 160 |
| 1500.0 | 178 | 140 |
| 2296.5 | 134 | 113 |
| 125 Notched Izod Impact Room Temp. | 59.1(100) | 64.2(100) |
| -20°C | 43.8(100) | 35.7(75) |
| -30°C | 23.4(0) | 32.6(60) |
| Double gate Room Temp. | 12.7(0) | 2.9(0) |

As the data demonstrates that with relatively high levels of SAN, the blends of the invention show a distinct processing advantage - higher melt viscosity index - as well as maintaining the lower Vicat and HDT values expected from a lower Tg in comparison to standard polycarbonate containing blends. The melt viscosity shear rate data reinforces the melt viscosity data.

The Notched Izod data show that better impact resistance and ductility are maintained at lower temperatures with the compositions of the invention.

### EXAMPLE 23

Various quantities of polyethylene (PE) were blended with bisphenol A polycarbonate of 27,700 Mw (PC) and bisphenol-A polycarbonate with 10 mole % dodecanedioate content and having a Mw of 29,800. Knit line strength (kg-cm/cm) was measured according to ASTM D256 on a plaque made with a double gated tool. Below are the results:

| PE Content, wt% | | | |
|---|---|---|---|
| | 2.0 | 3.5 | 5.0 |
| PC | 178.5 | 38.1 | 16.9 |
| PEC | 182.9 | 121.4 | 71.8 |

Compatibility of the composition as measured by knit line strength is substantially improved using the copolyestercarbonate.

Inert fillers can also be present with the copolyestercarbonate of the invention. The copolyestercarbonate can be employed. Examples of such inert fillers include glass, carbon, ceramics, polyaramides and other materials. Ordinarily active fillers such as clays, mica and the like can be employed if they are passivated and made inert. Fibrous materials are preferred. Glass fibers are more preferred. Generally, a minimum of about 5 wt.% of the inert filler as measured by copolyestercarbonate plus inert filler should be employed so as to obtain improvement of flexural modulus. A maximum of about 60 wt.% of the inert filler can be employed.

A copolyestercarbonate having 10 mole% dodecanedioate ester content was prepared, and admixed with 9 wt.% of Owens Corning glass fiber. To a separate admixture of copolyestercarbonate and 9 wt.% glass fiber is added 1.5 wt.% of DPD6169, 82% ethylene and 18% ethylacrylate. Impact was measured on molded pieces from the control (no. DPD6169) and the impact modified admixture. Below are the results.

**TABLE**

| | Control | 1.5 wt.% DPD6169 |
|---|---|---|
| 125 Unnotched Izod kg-cm/cm | 70.2 | 145.8 |
| 125 Notched Izod kg-cm/cm | 11.9 | 30.2 |

As is readily observed from the data, an inert filler modified copolyestercarbonate of the invention is readily impact modified.

## Claims

1. A composition comprising an admixture of
(a) a copolyestercarbonate comprising the repeating units of the structure 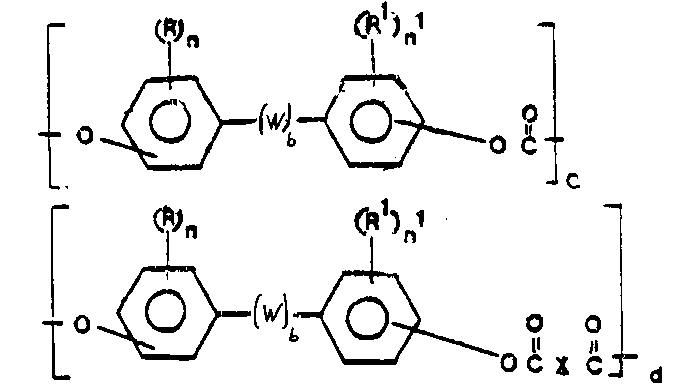 wherein :
R is independently selected from halogen, monovalent hydrocarbon, and monovalent hydrocarbonoxy radicals;
R¹ is independently selected from halogen, monovalent hydrocarbon and monovalent hydrocarbonoxy radicals;
W is selected from divalent hydrocarbon radicals, -S-, -S-S-, -O-, 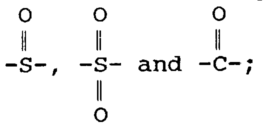
n and n¹ are independently selected from integers having a value of from 0 to 4 inclusive;
b is either zero or one;
X is an aliphatic group of 6 to 18 carbon atoms, inclusive;
d is from 2 to 30 mole percent of the total units c+d; and
(b) an impact modifier composition comprising an impact modifier which improves the impact properties of aromatic polycarbonate, said impact modifier composition being present in an amount of from 2 to 50 wt % based on the total amount of (a)+(b).

2. The composition in accordance with Claim 1 wherein the dihydric phenol residue is a 4,4"-dihydric phenol.

3. The composition in accordance with Claim 1 or Claim 2 wherein the impact modifier polymer is selected from the group consisting of an acrylate, an olefin, a styrenic, a rubber, an EPDM and a siloxane.

4. The composition in accordance with any preceding claim wherein the impact modifier is present in from 2 to 20 wt % based on the total amount of (a)+(b).

5. The composition in accordance with Claim 4 wherein the impact modifier is present in from 4 to 20 wt % based on the total amount of a (a)+(b).

6. The composition in accordance with Claim 5 wherein the impact modifier is ABS.

7. The composition in accordance with Claim 5 wherein the impact modifier is MBS.

8. The composition in accordance with Claim 5 wherein the impact modifier is a polyolefin.

9. The composition in accordance with Claim 5 wherein the impact modifier is a polyacrylate.

10. The composition in accordance with Claim 5 wherein the impact modifier is an EPDM.

11. The composition in accordance with Claim 5 wherein the impact modifier is an olefin acrylate copolymer.

12. The composition in accordance with Claim 5 wherein the impact modifier is a copolysiloxanecarbonate.

13. The composition in accordance with Claim 5 wherein the impact modifier is a styrenic polymer.

14. The composition in accordance with Claim 1 wherein the impact modifier is an ABS and is present in an amount of 4 to 40 wt %, based on the total amount of (a)+(b)

15. The composition in accordance with any preceding claim wherein X is 7 to 10 carbon atoms and is a normal saturated alkylene.

16. The composition in accordance with any preceding claim wherein d is 5 to 25 mole percent of the total units c+d.

17. The composition in accordance with Claim 16 wherein d is 7 to 20 mole percent of the total units c+d.

18. The composition in accordance with any preceding claim wherein the copolyestercarbonate is a bisphenol A copolyestercarbonate.

19. The composition in accordance with any preceding claim wherein X is 7 to 10 carbon atoms and is a normal saturated alkylene, and the copolyestercarbonate is a bisphenol A copylestercarbonate wherein d is from 5 to 25 mole percent of the total units c+d thereby providing a copolyestercarbonate with 5 to 25 mole percent ester content.

20. The composition in accordance with any preceding claim wherein there is no more than 10 wt % impact modifier.

21. The composition in accordance with any preceding claim wherein an inert filler is also present.

22. The composition in accordance with any preceding claim where an aromatic polycarbonate is also present .

23. The composition in accordance with any preceding claim wherein a styrenic acrylonitrile copolymer is also present.

## Patentansprüche

1. Eine Zusammensetzung, die eine Beimischung von
(a) einem Copolyestercarbonat, das sich wiederholende Einheiten der Struktur 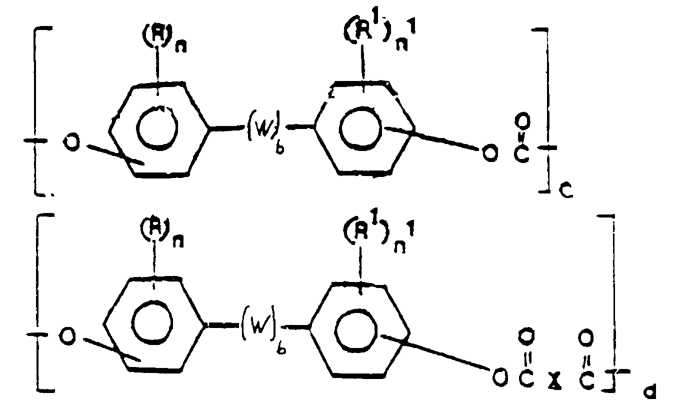 umfaßt, worin:
R unabhängig ausgewählt ist aus Halogen, einwertigem Kohlenwasserstoff und einwertigen Hydrocarbonoxyresten;
R¹ unabhängig ausgewählt ist aus Halogen, einwertigem Kohlenwasserstoff und einwertigen Hydrocarbonoxyresten;
W aus zweiwertigen Kohlenwasserstoffresten ausgewählt ist, -S-, -S-S-, -O-, 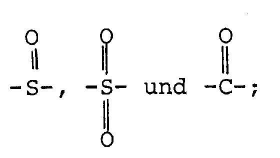
n und n¹ unabhängig aus ganzen Zahlen mit einem Wert von 0 bis 4 einschließlich ausgewählt sind;
b entweder Null oder 1 ist;
X eine aliphatische Gruppe von 6 bis 18 Kohlenstoffatomen einschließlich ist;
d von 2 bis 30 Molprozent der gesamten Einheiten c + d beträgt; und
(b) einer Schlagmodifizierungszusammensetzung, die ein Schlagmodifizierungsmittel umfaßt, das die Schlagfestigkeitseigenschaften von aromatischem Polycarbonat verbessert und besagte Schlagmodifizierungszusammensetzung in einer Menge von 2 bis 50 Gew.-%, bezogen auf die gesamte Menge von (a) + (b),
umfaßt.

2. Zusammensetzung gemäß Anspruch 1, worin der zweiwertige Phenolrest ein 4,4"-zweiwertiges Phenol ist.

3. Zusammensetzung nach Anspruch 1 oder Anspruch 2, worin das schlagmodifizierende Polymer ausgewählt ist aus der Gruppe bestehend aus einem Acrylat, einem Olefin, einem Styrol, einem Gummi einem EPDM und einem Siloxan.

4. Zusammensetzung nach einem der vorausgehenden Ansprüche, worin das Schlagmodifizierungsmittel in einer Menge von 2 bis 20 Gew.-%, basierend auf der Gesamtmenge von (a) + (b), vorhanden ist.

5. Zusammensetzung nach Anspruch 4, worin das Schlagmodifizierungsmittel in einer Menge von 4 bis 20 Gew.-%, basierend auf der Gesamtmenge von (a) + (b) vorhanden ist.

6. Zusammensetzung nach Anspruch 5, worin das Schlagmodifizierungsmittel ABS ist.

7. Zusammensetzung nach Anspruch 5, worin das Schlagmodifizierungsmittel MBS ist.

8. Zusammensetzung nach Anspruch 5, worin das Schlagmodifizierungsmittel ein Polyolefin ist.

9. Zusammensetzung nach Anspruch 5, worin das Schlagmodifizierungsmittel ein Polyacrylat ist.

10. Zusammensetzung nach Anspruch 5, worin das Schlagmodifizierungsmittel ein EPDM ist.

11. Zusammensetzung nach Anspruch 5, worin das Schlagmodifizierungsmittel ein Olefin-Acrylat-Copolymer ist.

12. Zusammensetzung nach Anspruch 5, worin das Schlagmodifizierungsmittel ein Copolysiloxancarbonat ist.

13. Zusammensetzung nach Anspruch 5, worin das Schlagmodifizierungsmittel ein Styrolpolymer ist.

14. Zusammensetzung nach Anspruch 1, worin das Schlagmodifizierungsmittel ein ABS ist, das in einer Menge von 4 bis 40 Gew.-%, bezogen auf die Gesamtmenge von (a) + (b) vorhanden ist.

15. Zusammensetzung nach einem der vorausgehenden Ansprüche, worin X 7 bis 10 Kohlenstoffatome darstellt und ein normales gesättigtes Alkylen ist.

16. Zusammensetzung nach einem der vorausgehenden Ansprüche, worin d 5 bis 25 Mol-% der gesamten Einheiten c + d umfaßt.

17. Zusammensetzung nach Anspruch 16, worin d 7 bis 20 Mol-% der gesamten Einheiten c + d umfaßt.

18. Zusammensetzung nach einem der vorausgehenden Ansprüche, worin das Copolyestercarbonat ein Bisphenol-A-copolyestercarbonat ist.

19. Zusammensetzung nach einem der vorausgehenden Ansprüche, worin X 7 bis 10 Kohlenstoffatome darstellt und ein normales gesättigtes Alkylen ist und das Copolyestercarbonat ein Bisphenol-A-copolyestercarbonat ist, worin d 5 bis 25 Mol-% der gesamten Einheiten c + d umfaßt, wodurch ein Copolyestercarbonat mit 5 bis 25 Mol-% Estergehalt geschaffen wird.

20. Zusammensetzung nach einem der vorausgehenden Ansprüche, worin nicht mehr als 10 Gew.-% Schlagmodifizierungsmittel enthalten sind.

21. Zusammensetzung nach einem der vorausgehenden Ansprüche, worin ein inerter Füllstoff ebenfalls vorhanden ist.

22. Zusammensetzung nach einem der vorausgehenden Ansprüche, worin ebenfalls ein aromatisches Polycarbonat vorhanden ist.

23. Zusammensetzung nach einem der vorausgehenden Ansprüche, worin ebenfalls ein Styrol-Acrylnitril-Copolymer vorhanden ist.

## Revendications

1. Composition comprenant un mélange de
(a) un copoly(ester/carbonate) comprenant les motifs répétitifs de structures : 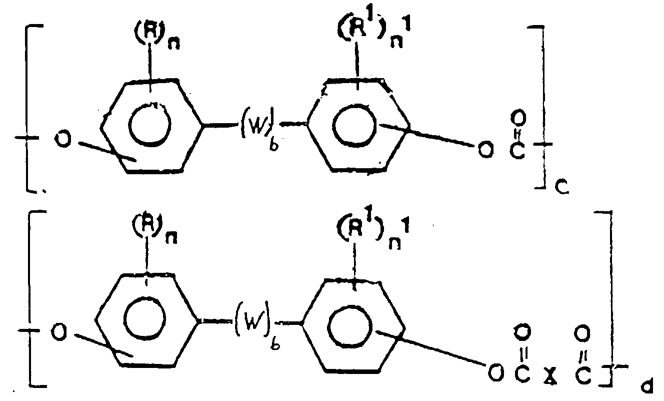 dans lesquelles :
R est indépendamment choisi parmi un atome d'halogène, des radicaux hydrocarbonés monovalents et hydrocarbyloxy monovalents ;
R¹ est indépendamment choisi parmi un atome d'halogène, des radicaux hydrocarbonés monovalents et hydrocarbyloxy monovalents ;
W est choisi parmi les radicaux hydrocarbonés divalents, -S-, -S-S-, -O-, 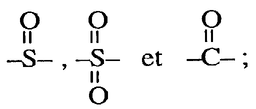
n et n¹ sont indépendamment choisis parmi les nombres entiers ayant une valeur comprise entre 0 et 4, bornes incluses ;
b vaut soit 0 soit 1 ;
X représente un groupe aliphatique comportant de 6 à 18 atomes de carbone, bornes incluses ;
d est compris entre 2 et 30 % en moles de la totalité des motifs c+d ; et
(b) une composition d'agent de modification de la résistance au choc comprenant un agent de modification de la résistance au choc qui améliore les propriétés de résistance au choc du polycarbonate aromatique, ladite composition d'agent de modification de la résistance au choc étant présente en une proportion comprise entre 2 et 50 % en poids par rapport à la proportion totale de (a) + (b).

2. Composition conforme à la revendication 1, dans laquelle le résidu de type phénol dihydroxylé est le phénol dihydroxylé en positions 4 et 4".

3. Composition conforme à la revendication 1 ou 2, dans laquelle le polymère de l'agent de modification de la résistance au choc est choisi dans l'ensemble constitué par un acrylate, une oléfine, un polymère styrénique, un caoutchouc, un EPDM et un siloxane.

4. Composition conforme à l'une quelconque des précédentes revendications, dans laquelle l'agent de modification de la résistance au choc est présent en une proportion comprise entre 2 et 20 % en poids par rapport à la proportion totale de (a) + (b).

5. Composition conforme à la revendication 4, dans laquelle l'agent de modification de la résistance au choc est présent en une proportion comprise entre 4 et 20 % en poids par rapport à la proportion totale de (a) + (b).

6. Composition conforme à la revendication 5, dans laquelle l'agent de modification de la résistance au choc est l'ABS.

7. Composition conforme à la revendication 5, dans laquelle l'agent de modification de la résistance au choc est le MBS.

8. Composition conforme à la revendication 5, dans laquelle l'agent de modification de la résistance au choc est une polyoléfine.

9. Composition conforme à la revendication 5, dans laquelle l'agent de modification de la résistance au choc est un polyacrylate.

10. Composition conforme à la revendication 5, dans laquelle l'agent de modification de la résistance au choc est un EPDM.

11. Composition conforme à la revendication 5, dans laquelle l'agent de modification de la résistance au choc est un copolymère d'oléfine et d'acrylate.

12. Composition conforme à la revendication 5, dans laquelle l'agent de modification de la résistance au choc est un copolymère de siloxane et de carbonate.

13. Composition conforme à la revendication 5, dans laquelle l'agent de modification de la résistance au choc est un polymère styrénique.

14. Composition conforme à la revendication 1, dans laquelle l'agent de modification de la résistance au choc est un ABS et il est présent en une proportion comprise entre 4 et 40 % en poids par rapport à la proportion totale de (a) + (b).

15. Composition conforme à l'une quelconque des précédentes revendications, dans laquelle X comporte de 7 à 10 atomes de carbone et représente un groupe alkylène normal saturé.

16. Composition conforme à l'une quelconque des précédentes revendications, dans laquelle d est compris entre 5 et 25 % en moles de la totalité des motifs c + d.

17. Composition conforme à la revendication 16, dans laquelle d est compris entre 7 et 20 % en moles de la totalité des motifs c + d.

18. Composition conforme à l'une quelconque des précédentes revendications, dans laquelle le copoly(ester/carbonate) est le copoly(ester/carbonate) de bisphénol A.

19. Composition conforme à l'une quelconque des précédentes revendications, dans laquelle X comporte de 7 à 10 atomes de carbone et représente un groupe alkylène normal saturé, et le copoly(ester/carbonate) est un copoly(ester/carbonate) de bisphénol A dans lequel d est compris entre 5 et 25 % en moles de la totalité des motifs c + d, ce qui permet de fournir un copoly(ester/carbonate) ayant une teneur en ester de 5 à 25 % en moles.

20. Composition conforme à l'une quelconque des précédentes revendications, dans laquelle il n'y a pas plus de 10 % en poids d'agent de modification de la résistance au choc.

21. Composition conforme à l'une quelconque des précédentes revendications, dans laquelle est également présente une charge inerte.

22. Composition conforme à l'une quelconque des précédentes revendications, dans laquelle est également présent un polycarbonate aromatique.

23. Composition conforme à l'une quelconque des précédentes revendications, dans laquelle est également présent un copolymère d'un polymère styrénique et d'acrylonitrile.
